**Europäisches Patentamt**

**European Patent Office**

**Office européen des brevets**

(19)

(11) Veröffentlichungsnummer: **0 284 123 B1**

(12)

# EUROPÄISCHE PATENTSCHRIFT

(45) Veröffentlichungstag der Patentschrift:
02.05.91 Patentblatt 91/18

(51) Int. Cl.⁵: **B60R 21/20**

(21) Anmeldenummer: 88200331.2

(22) Anmeldetag: 24.02.88

(54) **Sicherheitslenkrad.**

(30) Priorität: 07.03.87 DE 3707370

(43) Veröffentlichungstag der Anmeldung:
28.09.88 Patentblatt 88/39

(45) Bekanntmachung des Hinweises auf die
Patenterteilung:
02.05.91 Patentblatt 91/18

(84) Benannte Vertragsstaaten:
DE ES FR GB IT SE

(56) Entgegenhaltungen:
DE-A- 3 116 538
DE-U- 8 619 670
FR-A- 2 200 814
FR-A- 2 449 004

(73) Patentinhaber: KOLBENSCHMIDT
Aktiengesellschaft
Karl-Schmidt-Strasse 8/12 Postfach 1351
W-7107 Neckarsulm (DE)

(72) Erfinder: Werner, Heribert
Goethestrasse 4
W-8756 Kahl (DE)
Erfinder: Grothe, Klaus
Aschaffenburger Strasse 127
W-8750 Aschaffenburg (DE)
Erfinder: Kreuzer, Martin
Wendelinusweg 2
W-8751 Kleinwallstadt (DE)

(74) Vertreter: Rieger, Harald, Dr.
Reuterweg 14
W-6000 Frankfurt a.M. (DE)

## Beschreibung

Die Erfindung betrifft ein Sicherheitslenkrad mit einer aus weichem elastischem Kunststoff gebildeten Ummantelung und einer auf der Lenkradnabe angeordneten Aufprallschutzvorrichtung, die aus einem in Ruhestellung zusammengefalteten, bei einem Aufprall mittels eines durch ein in einem Gehäuse untergebrachten Treibmittels erzeugbaren Druckgases schlagartig aufblasbaren Gassack und einer über dem Gassack befindlichen Abdeckhaube aus weichem elastischem Kunststoff mit einer darin eingebetteten, am Träger des das Treibmittel enthaltenden Gehäuses befestigten, das Gehäuse und den Gassack rahmenartig umgebenden Armierungsschicht sowie mit einer entlang des freien Randes der Armierungsschicht verlaufenden Sollbruchstelle besteht.

Eine solche Abdeckhaube dient nicht nur dem Schutz des zusammengefalteten Gassacks und dem das Treibmittel für das Aufblasen des Gassacks enthaltenden Gehäuses, sondern soll darüber hinaus auch noch eine ausreichende ästhetische Wirkung besitzen. Bekanntermaßen besteht eine solche Abdeckhaube aus einer mit Gewebeeinlagen aus Nylonfäden verstärkten weichen elastischen Kunststoffschicht, vorzugsweise aus Polyurethan-Schaum, mit einer oder mehreren Sollbruchstellen, entlang denen die Kunststoffschicht im Falle einer Auslösung der Aufprallschutzvorrichtung aufreißt. Die Abdeckhaube besitzt einen auf ihrer Innenseite umlaufenden Hinterschnitt, mit dem sie hinter eine entsprechende Kröpfung des Trägers für das Gehäuse des Treibmittels greift. Um bei einer Auslösung der Aufprallschutzvorrichtung ein selbsttätiges Ablösen der Abdeckhaube von dem Gehäuseträger zu vermeiden, ist ein weiterer Blechstreifen erforderlich, zwischen dem und dem gegenüberliegenden Träger für das das Treibmittel enthaltende Gehäuse der Rand der Abdeckhaube fest eingeklemmt ist.

Da die die Abdeckhaube verstärkende Gewebeeinlage aus mehreren miteinander vernähten Einzelteilen aus Nylonfäden besteht, ist es im allgemeinen recht schwierig, stets die genaue Paßform der Gewebeeinlage herzustellen, so daß es zu einer relativ hohen Ausschußquote kommt. Darüber hinaus erfordert das Einlegen der Gewebeeinlage in die Gießform bei der Herstellung der aus weichem elastischem Kunststoff bestehenden Abdeckhaube einen vergleichsweise hohen Zeitaufwand mit längeren Stillstandzeiten der Gießmaschine. Ein weiterer Nachteil ist darin zu sehen, daß die aus einer Gewebeeinlage bestehende Armierungsschicht ein Ausbeulen der Kunststoffhaube durch die von dem zusammengefalteten Gassack ausgehenden Kräfte nicht verhindern kann.

Aus der dem Oberbegriff des Anspruchs 1 entsprechenden DE-A- 3 116 538 ist eine aus geschäumtem Kunststoffmaterial bestehende Abdeckhaube für den zusammengefalteten Gassack bekannt, die durch eine kappenartig gewölbte flexible spritzgegossene Einlage aus Kunststoff verstärkt ist. Diese Verstärkungseinlage ist durch einen einfachen Spritzvorgang paßgenau in stabiler Form herstellbar und läßt sich ohne Schwierigkeit in die Schäumform für die Abdeckhaube einbringen. Es ist allerdings nicht gewährleistet, daß die Verstärkungseinlage beim Einschäumen ihre Lage in der Gießform nicht verändert und ein Ausbeulen der Abdeckhaube verhindert.

Der Erfindung liegt die Aufgabe zugrunde, eine Armierungsschicht für die Abdeckhaube mit genau reproduzierbarer Paßform zu schaffen, deren Herstellung mit relativ einfachen Mitteln möglich ist und die ohne jeden besonderen Zeitaufwand in die Gießform, in der das Umgießen mit dem weichen elastischen Kunststoff erfolgt, einlegbar ist. Die Armierungsschicht soll ferner ein Ausbeulen der Abdeckhaube dauerhaft verhindern.

Gelöst ist diese Aufgabe dadurch, daß die Armierungsschicht durch einen Metallrahmen mit wenigstens einem am fahrerraumseitigen Rand des Rahmens angebrachten, in Ruhestellung vor dem zusammengefalteten Gassack stehenden, bei einem Aufprall entlang einer geraden Linie zum Fahrerraum hin aufbiegbaren, einteilig mit dem Rahmen verbundenen streifenförmigen Halteabschnitt und einer an dem Halteabschnitt befestigten, den Gassack abdeckenden Armierungsschicht aus hartem Kunststoff gebildet ist.

Im Falle der Auslösung der Aufprallschutzvorrichtung reißt die Kunststoffschicht der Abdeckhaube entlang der Sollbruchstelle auf. Der Halteabschnitt wird zusammen mit der daran befestigten Armierungsschicht aus Kunststoff zum Fahrerraum hin aufgebogen und der Gassack tritt in den Fahrerraum aus.

Zweckmäßigerweise sind an dem fahrerraumseitigen Rand des Rahmens mehrere Halteabschnitte, die über schmale Stege mit dem Rahmen einteilig verbunden sind, angebracht.

Damit die weiche elastische Kunststoffschicht fest mit der aus Kunststoff bestehenden Armierungsschicht verbunden werden kann, ist diese mit zahlreichen Durchbrechungen versehen, die vorzugsweise aus regelmäßig angebrachten Löchern bestehen, wobei die Armierungsschicht zweckmäßig eine netzförmige Struktur besitzt. Durch die Durchbrechungen kann der Kunststoff auch auf die der Lenksäule zugewandten Seite der Armierungsschicht treten und dort eine geschlossene Schicht bilden.

Damit sich im Falle der Auslösung der Aufprallschutzvorrichtung keine Kunststoffteile der mit den Halteabschnitten verbundenen Armierungsschicht von den Halteabschnitten lösen können, sind diese mit Durchbrechungen versehen, in denen der Kunststoff der Armierungsschicht festgehalten wird.

Die Durchbrüche der Halteabschnitte besitzen eine solche Größe, daß einerseits das Gewicht des Rahmens so niedrig wie möglich gehalten und andererseits das ästhetische Aussehen der Abdeckhaube durch ein Abformen der Durchbrüche in dem weichen elastischen Kunststoff nicht beeinträchtigt werden.

Der Rahmen ist über übliche Befestigungselemente, vorzugsweise über Blindnieten oder Schrauben, mit dem Träger für das das Treibmittel enthaltende Gehäuse verbunden. Nach einer besonderen Ausführungsart ist der Rahmen mit nach außen gerichteten Einbuchtungen versehen, in die jeweils die zum Gassack gerichteten Teile der Befestigungselemente hineinragen, so daß eine Beschädigung des Gassackes durch die Befestigungselemente ausgeschlossen ist.

Der Rahmen mit den daran angebrachten Halteabschnitten besteht vorzugsweise aus Blech mit einer Dicke von 0,5 bis 1,5 mm.

Der Rahmen ist entweder durch Tiefziehen geformt oder aus einem gestanzten in eine entsprechende Form gebrachten gelöteten bzw. geschweißten Blechstreifen gefertigt.

Die mit der Erfindung erzielten Vorteile bestehen insbesondere darin, daß der Rahmen, die damit einteilig über Stege verbundenen Halteabschnitte und die an den Halteabschnitten befestigten aus hartem Kunststoff bestehenden Armierungsschichten maßlich genau herstellbar und problemlos in die Gießform für die Herstellung der weichen elastischen Kunststoffschicht einsetzbar sind. Ferner erlaubt der Rahmen eine Formgebung, die jeder gewünschten Gestalt der Abdeckhaube anpaßbar ist. Die in Ruhestellung vor dem Gassack stehenden Halteabschnitte mit den daran befestigten Armierungsschichten verhindern sehr wirksam ein Ausbeulen der Abdeckhaube durch die von dem zusammengefalteten Gassack ausgehenden Kräfte.

Die Erfindung ist in der Zeichnung beispielhaft dargestellt und wird nachfolgend näher erläutert. Es zeigen

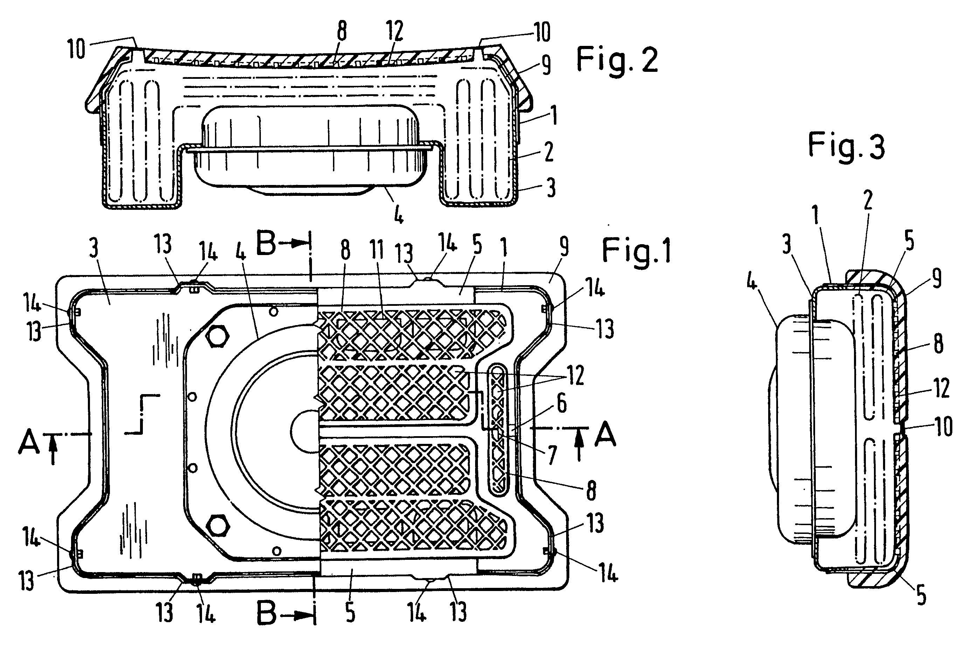

Fig. 1 eine Draufsicht auf die Aufprallschutzvorrichtung mit im Aufbruch dargestellten Halteabschnitten mit daran befestigten Armierungsschichten.

Fig. 2 einen Schnitt entlang der Schnittlinie A-A der Fig. 1.

Fig. 3 einen Schnitt entlang der Schnittlinie B-B der Fig. 1.

Der aus 0,75 mm dickem Stahlblech bestehende durch Tiefziehen im wesentlichen rechteckig geformte Rahmen (1) umgibt die aus dem zusammengefalteten Gassack (2) und dem Träger (3) für das Treibmittel für das Aufblasen des Gassacks (2) enthaltende Gehäuse (4) gebildete Aufprallschutzvorrichtung. Am fahrerraumseitigen Rand der beiden gegenüberliegenden Längsseiten des Rahmens (1) ist jeweils ein streifenförmiger über nicht dargestellte Stege mit dem Rahmen (1) verbundener Halteabschnitt (5) angebracht. Am Rand der Breitseiten des Rahmens (1) befindet sich jeweils ein über einen Steg (6) mit dem Rahmen (1) verbundener zusätzlicher Halteabschnitt (7). Mit den Halteabschnitten (5, 7) ist jeweils eine aus Polyamid gebildete Armierungsschicht (8) für die aus Polyurethanschaum gebildete Ummantelung (9) fest verbunden. Entlang der nicht unmittelbar mit den Halteabschnitten (5, 7) verbundenen Seiten der Armierungsschicht (8) ist die Ummantelung (9) vergleichsweise dünnwandig und armierungsfrei ausgebildet, so daß entlang dieser Bereiche die Sollbruchstellen (10) verlaufen. Die Halteabschnitte (5, 7) und die Armierungsschichten (8) sind mit Durchbrechungen (11, 12) versehen, damit das Polyamid der Armierungsschicht sowie der Polyurethanschaumschicht der Ummantelung (9), die auch lenksäulenseitig die Armierungsschicht abdecken kann, besser verankert sind. Der Rahmen (1) ist mit mehreren Einbuchtungen (13) versehen, in die die den Rahmen (1) mit dem Träger (3) verbindenden Blindnieten (14) mit ihren gassackseitigen Abschnitten hineinragen.

**Ansprüche**

1. Sicherheitslenkrad mit einer aus weichem elastischem Kunststoff gebildeten Ummantelung (9) und einer auf der Lenkradnabe angeordneten Aufprallschutzvorrichtung, die aus einem in Ruhestellung zusammengefalteten, bei einem Aufprall mittels eines durch ein in einem Gehäuse(4) untergebrachten Treibmittels erzeugbaren Druckgases schlagartig aufblasbaren Gassack (2) und einer über dem Gassack befindlichen Abdeckhaube aus weichem elastischem Kunststoff mit einer darin eingebetteten, am Träger des das Treibmittel enthaltenden Gehäuses (4) befestigten, das Gehäuse und den Gassack rahmenartig umgebenden Armierungsschicht (8) sowie mit einer entlang des frein Randes der Armierungsschicht (8) verlaufenden Sollbruchstelle (10) besteht, dadurch gekennzeichnet, daß die Armierungsschicht (8) durch einem Metallrahmen (1) mit wenigstens einem am fahrerraumseitigen Rand des Rahmens angebrachten, in Ruhestellung vor dem zusammengefalteten Gassack (2) stehenden, bei einem Aufprall entlang einer geraden Linie zum Fahrerraum hin aufbiegbaren, einteilig mit dem Rahmen verbundenen streifenförmigen Halteabschnitt (5, 7) und einer an dem Halteabschnitt befestigten, den Gassack abdeckenden Armierungsschicht (8) aus hartem Kunststoff gebildet ist.

2. Sicherheitslenkrad nach Anspruch 1, gekennzeichnet durch mehrere Halteabschnitte (5, 7).

3. Lenkrad nach den Ansprüchen 1 und 2, dadurch gekennzeichnet, daß die Halteabschnitte (5,7) über schmale Stege (6) mit dem Rahmen (1) verbunden sind.

4. Lenkrad nach den Ansprüchen 1 bis 3, dadurch gekennzeichnet, daß die Halteabschnitte (5, 7) Durchbrechungen (11) besitzen.

5. Lenkrad nach den Ansprüchen 1 bis 4, dadurch gekennzeichnet, daß der Rahmen (1) Durchbrechungen besitzt.

6. Lenkrad nach den Ansprüchen 1 bis 5, dadurch gekennzeichnet, daß der Rahmen (1) nach außen gerichtete Einbuchtungen (13), in die die den Rahmen mit dem Gehäuseträger (3) verbindenden Befestigungselemente (14), wie Nieten, Schrauben oder dergleichen, hineinragen, besitzt.

7. Lenkrad nach den Ansprüchen 1 bis 6, dadurch gekennzeichnet, daß die Armierungsschicht (8) Durchbrechungen (12) aufweist.

8. Lenkrad nach Anspruch 7, dadurch gekennzeichnet, daß die Durchbrechungen (12) durch regelmäßig angeordnete Löcher gebildet sind.

9. Lenkrad nach den Ansprüchen 7 und 8, dadurch gekennzeichnet, daß die Armierungsschicht (8) eine netzförmige Struktur aufweist.

10. Lenkrad nach den Ansprüchen 1 bis 9, dadurch gekennzeichnet, daß der Rahmen (1) und die mit diesem einteilig verbundenen Halteabschnitte (7) aus 0,5 bis 1,5 mm dickem Blech bestehen.

11. Lenkrad nach Anspruch 10, dadurch gekennzeichnet, daß der Rahmen (1) durch Tiefziehen geformt ist.

12. Lenkrad nach Anspruch 10, dadurch gekennzeichnet, daß der Rahmen aus einem gestanzten in eine entsprechende Form gebrachten gelöteten bzw. geschweißten Blechstreifen gefertigt ist.


## Claims

1. Safety steering wheel comprising a casing (9) formed of soft elastic plastic and an impact protection means arranged on the steering wheel hub, which means consists of a gas bag (2) which is folded up in the rest position and which in the event of an impact can be inflated suddenly by means of a compressed gas which can be produced by a propellant accommodated in a housing (4), and a covering hood located above the gas bag and made of soft elastic plastic having embedded therein a reinforcement layer (8) attached to the holder of the housing (4) which contains the propellent and surrounding the housing and the gas bag in frame-like manner, and also a predetermined breaking point (10) extending along the free edge of the reinforcement layer (8), characterised in that the reinforcement layer (8) is formed by a metal frame (1) with at least one strip-shaped holding section (5, 7) connected integrally to the frame and attached to the edge of the frame on the driver's space side and which in the rest position is located in front of the folded-up gas bag (2) and which can bend along a straight line towards the driver's space upon an impact and a reinforcement layer (8) made of hard plastic attached to the holding section and covering the gas bag.

2. Safety steering wheel according to Claim 1, characterised by a plurality of holding sections (5, 7).

3. Steering wheel according to Claims 1 and 2, characterised in that the holding sections (5, 7) are connected to the frame (1) by narrow bars (6).

4. Steering wheel according to Claims 1 to 3, characterised in that the holding sections (5, 7) have openings (11).

5. Steering wheel according to Claims 1 to 4, characterised in that the frame (1) has openings.

6. Steering wheel according to Claims 1 to 5, characterised in that the frame (1) has outward-facing recesses (13) into which the attachment elements (14), such as rivets, screws or the like, connecting the frame to the housing holder (3) project.

7. Steering wheel according to Claims 1 to 6, characterised in that the reinforcement layer (8) has openings (12).

8. Steering wheel according to Claim 7, characterised in that the openings (12) are formed by regularly arranged holes.

9. Steering wheel according to Claims 7 and 8, characterised in that the reinforcement layer (8) has a net-like structure.

10. Steering wheel according to Claims 1 to 9, characterised in that the frame (1) and the holding sections (7) connected integrally therewith are made of sheet metal 0.5 to 1.5 mm thick.

11. Steering wheel according to Claim 10, characterised in that the frame (1) is formed by deep-drawing.

12. Steering wheel according to Claim 10, characterised in that the frame is made of a punched metal strip which is brought into an appropriate shape and is soldered or welded.


## Revendications

1. Volant de sécurité comportant un revêtement (9) formé d'une matière plastique élastique molle, et un dispositif de protection contre les chocs monté sur le moyeu du volant et constitué par un sac à gaz (2) pouvant être gonflé brusquement au moyen d'un gaz comprimé produit par un agent soufflant logé dans un boîtier (4), et par un capot de fermeture disposé au-dessus du sac à gaz et réalisé en une matière plastique élastique molle et dans lequel est noyée une couche d'armature (8) fixée sur le support du boîtier (4) contenant l'agent soufflant et entourée, à la manière d'un cadre, par le boîtier et le sac à gaz, et possédant un point de rupture de consigne (10) s'étendant le long du bord libre de la couche d'armature (8), caractérisé par le fait que la couche d'armature (8) est formée par un cadre métallique (1), comportant au moins un élément de retenue en forme de bande (5, 7), qui est monté sur le bord du cadre, voisin du compartiment du conducteur, qui est en position de repos, à l'avant du sac à gaz (2), replié, qui, lors d'un choc, s'incurve le long d'une droite en direction du compartiment du conducteur, et qui est relié d'un seul tenant au cadre, et par une couche d'armature (8) réalisée en une matière plastique dure, fixée sur l'élément de retenue et recouvrant le sac à gaz.

2. Volant de sécurité suivant la revendication 1, caractérisé par plusieurs éléments de retenue (5, 7).

3. Volant suivant les revendications 1 et 2, caractérisé par le fait que les éléments de retenue (5, 7) sont raccordés au cadre (1) au moyen de barrettes étroites (6).

4. Volant suivant les revendications 1 à 3, caractérisé par le fait que les éléments de retenue (5, 7) possèdent des ouvertures (11).

5. Volant suivant les revendications 1 à 4, caractérisé par le fait que le cadre (1) possède des ouvertures.

6. Volant suivant les revendications 1 à 5, caractérisé par le fait que le cadre (1) possède des évidements (17) dirigés vers l'extérieur, dans lesquels pénètrent les éléments de fixation (14) reliant le cadre au support (3) du boîtier, comme par exemple des rivets, des vis ou analogues.

7. Volant suivant les revendications 1 à 6, caractérisé par le fait que la couche d'armature (8) possède des ouvertures (12).

8. Volant suivant la revendication 7, caractérisé par le fait que les ouvertures (12) sont formés par des trous disposés régulièrement.

9. Volant suivant les revendications 7 et 8, caractérisé par le fait que la couche d'armature (8) possède une structure en forme de filet.

10. Volant suivant les revendications 1 à 9, caractérisé par le fait que le cadre (1) et les éléments de retenue (7) raccordés d'un seul tenant au cadre sont formés par une tôle possédant une épaisseur comprise entre 0, 5 et 1, 5 mm.

11. Volant suivant la revendication 10, caractérisé par le fait que le cadre (1) est formé par emboutissage profond.

12. Volant suivant la revendication 10, caractérisé par le fait que le cadre est formé par des bandes de tôle découpées, brasées ou soudées, auxquelles on a donné une forme correspondante.

Fig. 3

Fig. 2

Fig. 1